# EUROPÄISCHE PATENTSCHRIFT

(11) **EP 3 594 187 B1**
(45) Veröffentlichungstag und Bekanntmachung des Hinweises auf die Patenterteilung: **08.06.2022**
(21) Anmeldenummer: 18183339.3
(22) Anmeldetag: 13.07.2018
(51) Int. Cl.: C02F 1/469, B01D 61/42, E04B 1/70, C02F 103/00, C02F 103/02, C02F 1/461, C02F 1/00

(54) **VERWENDUNG EINER REINIGUNGSVORRICHTUNG ZUR WASSERREINIGUNG**
USE OF A PURIFICATION DEVICE FOR WATER TREATMENT
L'UTILISATION D'UN DISPOSITIF DE PURIFICATION POUR LA PURIFICATION DE L'EAU

(43) Veröffentlichungstag der Anmeldung: 15.01.2020
(73) Patentinhaber: Airbus Defence and Space GmbH, 82024 Taufkirchen (DE)
(72) Erfinder: Reidt, Ulrich, 34613 Schwalmstadt (DE); Goebel, Johann, 81547 München (DE); Heller, Christoph, 82377 Penzberg (DE); Hummel, Thomas, 88682 Salem (DE)
(74) Vertreter: Daub, Thomas

(56) Entgegenhaltungen:
- US-A- 3 725 233
- US-A- 4 118 299
- US-A1- 2011 097 215
- US-A1- 2017 088 443
- US-A1- 2017 095 772

## Beschreibung

### Stand der Technik

Die Erfindung betrifft die Verwendung einer Reinigungsvorrichtung zur Reinigung von mit Mikroorganismen und/oder nicht belebten Schwebstoffen verunreinigtem Wasser.

Aus der US 2017/0095772 A1 ist bereits eine Reinigungsvorrichtung zur Reinigung von Flüssigkeiten bekannt, mit zumindest einem ersten Aufnahmebereich zu einer Aufnahme einer verunreinigten Flüssigkeit, mit zumindest einem zweiten Aufnahmebereich zu einer Aufnahme einer gereinigten Flüssigkeit und mit zumindest einer zwischen dem ersten Aufnahmebereich und dem zweiten Aufnahmebereich angeordneten Membraneinheit, welche zumindest teilweise als Trennmedium zwischen dem ersten Aufnahmebereich und dem zweiten Aufnahmebereich dient.

Des Weiteren ist aus der US 2011/0097215 A1 ebenfalls bereits eine Reinigungsvorrichtung zur Reinigung von Flüssigkeiten bekannt.

Ferner werden gegenwärtig Mikroorganismen aus Flüssigkeiten mittels Filtration entfernt.

Dazu wird die entsprechende Flüssigkeit mittels einer Pumpe über spezielle Reinigungsfilter gepumpt. Gängige Filtrierungsmethoden sind beispielsweise Umkehrosmose oder das Reinigen mit einem Hohlfaserfilter. Nachteile der Reinigungsmethoden sind beispielsweise das starke Anheften der Bakterien auf dem Filter. Ein sanftes Ablösen ist nur schwer möglich. Auch wird bei diesen Reinigungsmethoden ein großer Anteil der Mikroorganismen geschädigt und abgetötet, so dass kein effektiver Nachweis von lebenden Keimen mehr möglich ist.

Die Aufgabe der Erfindung besteht darin, eine Verwendung der Vorrichtung bereitzustellen, wobei die Vorrichtung zur Reinigung von verunreinigtem Wasser verwendet wird.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Verwendung einer Reinigungsvorrichtung zur Reinigung von mit Mikroorganismen und/oder nicht belebten Schwebstoffen verunreinigtem Wasser, mit zumindest einem ersten Aufnahmebereich zu einer Aufnahme einer verunreinigten Flüssigkeit, mit zumindest einem zweiten Aufnahmebereich zu einer Aufnahme einer gereinigten Flüssigkeit und mit zumindest einer zwischen dem ersten Aufnahmebereich und dem zweiten Aufnahmebereich angeordneten Membraneinheit, wobei die zumindest eine Membraneinheit eine elektroosmotische Membran umfasst, welche zumindest teilweise als Trennmedium zwischen dem ersten Aufnahmebereich und dem zweiten Aufnahmebereich dient, und die elektroosmotische Membran an einer ersten Oberfläche eine erste Elektrode aufweist und die elektroosmotische Membran an einer der ersten Oberfläche gegenüberliegenden zweiten Oberfläche eine zweite Elektrode aufweist und die bei einem Anlegen einer Spannung dazu vorgesehen ist, mittels eines elektroosmotischen Effekts Flüssigkeit von dem ersten Aufnahmebereich in den zweiten Aufnahmebereich zu transportieren.

Es wird vorgeschlagen, dass die elektroosmotische Membran in einem gefüllten Zustand des ersten Aufnahmebereichs vollständig mit dem, insbesondere mit den Mikroorganismen und/oder den nicht belebten Schwebstoffen, verunreinigten Wasser benetzt ist, und in einem Reinigungsschritt zu einer Reinigung des verunreinigten Wassers in dem ersten Aufnahmebereich eine Spannung an die Elektroden der elektroosmotischen Membran angelegt wird und mittels eines elektroosmotischen Effekts Flüssigkeit von dem ersten Aufnahmebereich in den zweiten Aufnahmebereich transportiert wird, wobei durch geeignete Wahl der Porengröße der elektroosmotischen Membran sowohl die Pump- als auch die Trenneigenschaften der elektroosmotischen Membran definiert werden, wobei abhängig von der Porengröße unterschiedlichste Stoffe durch die elektroosmotische Membran abgetrennt werden, wobei die elektroosmotische Membran eine Porengröße zwischen 0,1 µm und 2 µm aufweist, wobei nur die elektroosmotische Membran als Trennmedium zwischen den Aufnahmebereichen dient. Vorzugsweise weist die zumindest eine Membraneinheit zumindest zwei Elektroden, und zwar eine erste Elektrode und eine zweite Elektrode, auf, wobei die elektroosmotische Membran zumindest die erste Elektrode aufweist. Bevorzugt sind die erste Elektrode und die zweite Elektrode zu einer Erzeugung eines elektrischen Felds vorgesehen. Vorzugsweise wirken die Poren der Membran sowohl als Pumpe als auch als Trennmedium. Insbesondere wirken die Poren der Membran bei einer anliegenden Spannung als Pumpe. Bevorzugt wirken die Poren der Membran als Trennmedium zwischen der Flüssigkeit des ersten Aufnahmebereichs und des zweiten Aufnahmebereichs, wobei durch Anlegen einer Spannung, insbesondere abhängig von einer Porengröße, die Flüssigkeit befreit von Schmutzpartikeln, Bakterien, Viren oder dergleichen durch die Membran gepumpt werden kann. Bevorzugt ist die erste Elektrode insbesondere von einer Beschichtung, insbesondere aus einem inerten, leitenden Material, wie beispielsweise Gold, auf einem Grundmaterial der elektroosmotischen Membran gebildet. Besonders bevorzugt ist die erste Elektrode an einer ersten Oberfläche der elektroosmotischen Membran angeordnet, welche sich parallel zu einer Haupterstreckungsebene der elektroosmotischen Membran erstreckt.

Die Reinigungsvorrichtung ist zur Reinigung von Wasser vorgesehen, wie insbesondere Trinkwasser, Schmutzwasser, wie beispielsweise Abwasser, Getränke, wie beispielsweise Säfte, Bier, Wein oder Sekt, Pufferlösungen, Saline, Säuren und Laugen, Blut, Urin, Speichel, Öle, Hydraulikflüssigkeiten, Kühlwasser und/oder Ballastwasser von Schiffen. Ferner kann die Reinigungsvorrichtung mit der elektroosmotischen Membran insbesondere in verschiedenen, einem Fachmann als sinnvoll erscheinenden Bereichen praktisch angewendet werden, wie beispielsweise zu der Entfernung von Mikroorganismen aus Trinkwasser, insbesondere zu der Entfernung von Bakterien, Protozoen, Hefen, Viren, Pilzen, Pilzsporen und/oder Algen, zu der Anreicherung von Mikroorganismen zum Zweck der Detektion und/oder Identifikation, zu der Abtrennung von nicht belebten Schwebstoffen anorganischer und organischer Art, wie insbesondere von Kunststoffen, Silikaten, Metallen, Holz, Erde, mineralische Verbindungen und/oder Ruß, zu der Reinigung von Getränken, wie insbesondere von Trinkwasser, Softdrinks, Säften, Milch und Milchprodukten und/oder von alkoholischen Getränken wie Bier, Wein und/oder Sekt, zur Proteinreinigung, zur Dialyse von Proteinen zur Umpufferung und Entsalzung bei der Proteinreinigung, zur Blutreinigung bei Niereninsuffizienz, wie insbesondere zu einem Einsatz als künstliche Niere oder künstliche Leber, zur Reinigung von Kühlwasser, zur Reinigung von Hydraulikflüssigkeit, im Brauereiwesen, insbesondere zur Abtrennung der Hefe nach dem Brauprozess, in der Weinherstellung, beispielsweise zur Klärung des Weins, zum Abernten eines Fermenters oder Bioreaktors für Bakterien, Algen oder Hefezellen, in Kläranlagen, insbesondere zur Aufarbeitung von Abwässern, und/oder in Lebenserhaltungssystemen in geschlossenen Habitaten, wie insbesondere in U-Booten, Raumstationen, Schiffen und/oder Polarstationen, insbesondere zur Aufarbeitung von Stoffwechselendprodukten wie Urin und Fäkalien. Ferner sind auch noch weitere Sonderanwendungen für die Reinigungsvorrichtung denkbar, wie beispielsweise für Wassertransporte jedweder Art, der Entfeuchtung von Luft und Gasen und/oder der Aufnahme von giftigen und radioaktiven Flüssigkeiten. Die Reinigungsvorrichtung kann daher insbesondere in verschiedenen Industriezweigen eingesetzt werden, wie beispielsweise in der Automobilindustrie, in der Flugzeugindustrie, in der Raumfahrt, in der pharmazeutischen Industrie, beim Militär, insbesondere für Auslandseinsätze, in der Forschung und in Analyselabors, bei Wasserwerken, in der Getränkeindustrie, bei Brauereien, bei Winzern und/oder Hilfsorganisation, wie beispielsweise "Rotes Kreuz", "Ärzte ohne Grenzen" oder dergleichen.

Unter einem "Aufnahmebereich" soll in diesem Zusammenhang insbesondere ein Bereich verstanden werden, der zumindest zu einem Großteil materiell begrenzt ist und zu einer Aufnahme eines definierten Flüssigkeitsvolumens vorgesehen ist. Vorzugsweise ist der Aufnahmebereich zumindest teilweise durch einen den Aufnahmebereich begrenzenden Behälter gebildet. Ferner soll in diesem Zusammenhang unter einer "Membraneinheit" insbesondere eine Einheit verstanden werden, die zumindest ein Trennmedium, insbesondere eine Membran umfasst. Vorzugsweise umfasst die Membraneinheit eine als Trennschicht ausgebildete Membran. Besonders bevorzugt umfasst die Membraneinheit zumindest eine elektroosmotische Membran sowie Mittel zu einer Ansteuerung der elektroosmotischen Membran. Unter einer "elektroosmotischen Membran" soll in diesem Zusammenhang insbesondere eine Membran verstanden werden, welche bei einem Anlegen eines elektrischen Feldes, insbesondere senkrecht zu einer Oberfläche der Membran, zumindest eine Permeabilität, insbesondere eine selektive und/oder eine unidirektionale Permeabilität, aufweist. Vorzugsweise soll darunter insbesondere eine Membran verstanden werden, welche in zumindest einem Betriebszustand semipermeabel ausgebildet ist. Besonders bevorzugt soll darunter insbesondere eine Membran verstanden werden, bei welcher mittels Elektroosmose eine Permeabilität erzeugt werden kann. Vorzugsweise wandert bei der Membran eine Flüssigkeit mittels Elektroosmose durch die Poren der permeablen Membran mit Hilfe elektrischer Energie. Dabei tragen insbesondere die Wände einer Pore, welche insbesondere auch als Kapillare betrachtet werden kann, der Membran aufgrund ihrer Materialeigenschaften meist negative Ladungen, wie beispielsweise SiO⁻ bei Quarz. An diese fest gebundenen negativen Ladungen lagern sich insbesondere frei bewegliche, dissoziierte positive Ladungen, insbesondere Protonen und/oder Ionen, aus der Flüssigkeit, welche die Pore oder Kapillare füllen, an. Es entsteht dabei insbesondere eine elektrochemische Doppelschicht. Wird nun an den äußeren Enden der Pore oder Kapillare ein elektrisches Feld angelegt, wandern insbesondere die frei beweglichen positiven Ladungen, insbesondere die Protonen und/oder Ionen, entlang der Poreninnenwand zum negativen Pol und reißen dabei die gesamte Flüssigkeit in der Pore oder Kapillare mit. Es ergibt sich dadurch insbesondere eine Flüssigkeitspumpe ohne bewegliche Teile. Bevorzugt ist die so entstehende Flüssigkeitsbewegung über den ganzen Querschnitt der Kapillare gleichförmig. Dies ist beispielsweise ein wichtiger Aspekt bei Verwendung des elektroosmotischen Effekts in der sogenannten Kapillarelektrophorese, also insbesondere einer chemisch-analytischen Methode. Erfindungsgemäß wirken die Poren bei der Membran somit gleichzeitig sowohl als Pumpe als auch als Trennmedium bzw. Filter.

Vorzugsweise wird ein Fluss durch die elektroosmotische Membran gezielt gesteuert. Dies beinhaltet insbesondere sowohl die Richtung des Flusses als auch dessen Geschwindigkeit. Besonders bevorzugt erfolgt der Flüssigkeitstransport durch die elektroosmotische Membran durch einen elektrischen Potentialunterschied. Insbesondere kann für die Elektroosmose sowohl Wechsel- als auch Gleichspannung eingesetzt werden. Bevorzugt ist der elektroosmotische Fluss insbesondere abhängig von einer Oberflächenladung und damit abhängig von den Materialeigenschaften der elektroosmotischen Membran sowie vom pH-Wert der Flüssigkeit.

Bevorzugt weist die elektroosmotische Membran eine geringe Dicke auf, insbesondere weniger als 200 µm. Hierdurch kann insbesondere erreicht werden, dass bereits eine geringe Spannung, wie insbesondere 1 bis 10 Volt, ausreicht, um eine hohe Feldstärke zu erzielen. Ferner können dadurch Richtung und Leistung des Flüssigkeitstransportes mit einer einfachen Elektronik gesteuert werden.

Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Reinigungsvorrichtung kann insbesondere eine vorteilhaft effektive und energieeffiziente Vorrichtung zur Abtrennung von Verunreinigungen, insbesondere von Mikroorganismen aus Flüssigkeiten erreicht werden. Ferner können mittels der Reinigungsvorrichtung Flüssigkeiten effektiv ohne eine zusätzliche Pumpe von mikrobiologischen Verunreinigungen befreit werden. Des Weiteren kann dadurch ein zu hoher Druck an der Membran und damit die Gefahr von Durchbrüchen vermieden werden. Zudem kann dadurch ein effektives Anreichern von Mikroorganismen aus großen Flüssigkeitsvolumina ermöglicht werden. Ferner kann die Reinigungsvorrichtung insbesondere mit niedrigen Spannungen, wie insbesondere zwischen 1 und 10 Volt, betrieben werden, wodurch ein geringer Energieverbrauch möglich ist.

Erfindungsgemäß weist die zumindest eine elektroosmotische Membran an einer der ersten Oberfläche gegenüberliegenden zweiten Oberfläche eine zweite Elektrode aufweist. Vorzugsweise ist die zweite Elektrode insbesondere von einer Beschichtung, insbesondere aus einem inerten, leitenden Material, wie beispielsweise Gold, auf einem Grundmaterial der elektroosmotischen Membran gebildet. Besonders bevorzugt ist die zweite Elektrode an einer zweiten Oberfläche der elektroosmotischen Membran angeordnet, welche sich parallel zu einer Haupterstreckungsebene der elektroosmotischen Membran erstreckt. Vorzugsweise sind die erste Oberfläche und die zweite Oberfläche jeweils von sich parallel zueinander erstreckenden Hauptoberflächen der elektroosmotischen Membran gebildet. Bevorzugt weisen die erste Elektrode und die zweite Elektrode einen minimalen Abstand von maximal 200 µm, vorzugsweise von maximal 100 µm und besonders bevorzugt von maximal 50 µm auf. Dadurch kann insbesondere eine vorteilhaft effiziente Reinigungsvorrichtung bereitgestellt werden. Es kann insbesondere vorteilhaft ein elektroosmotischer Effekt bereitgestellt werden.

Insbesondere durch den geringen Abstand der Elektroden kann die Reinigungsvorrichtung dadurch insbesondere mit niedrigen Spannungen, wie insbesondere zwischen 1 und 10 Volt, betrieben werden, wodurch ein geringer Energieverbrauch möglich ist.

Des Weiteren wird vorgeschlagen, dass die Reinigungsvorrichtung zumindest eine Spannungsquelle aufweist, welche in zumindest einem ersten Betriebszustand dazu vorgesehen ist, eine Spannung an Elektroden der zumindest einen Membraneinheit bereitzustellen. Vorzugsweise ist die Spannungsquelle direkt, über eine Steuer- und/oder Regeleinheit oder über einen Schalter an die Elektroden der zumindest einen Membraneinheit angebunden. Es sind verschiedene, einem Fachmann als sinnvoll erscheinende Ausgestaltungen der Spannungsquelle denkbar, wie beispielsweise als ein Netzgerät, vorzugsweise ein Netzgerät mit einer Schutzerdung, als eine Batterie, als ein Akkumulator, als eine photovoltaische Solaranlage und/oder als ein Windrad mit Generator. Grundsätzlich wäre jedoch auch die Kombination mehrerer Spannungsquellen denkbar. Dadurch kann insbesondere eine vorteilhafte Energieversorgung der Membraneinheit bereitgestellt werden.

Es wird ferner vorgeschlagen, dass die zumindest eine Spannungsquelle von einer Solaranlage gebildet ist. Vorzugsweise weist die Solaranlage zumindest eine Solarzelle, insbesondere zumindest ein Solarpanel, auf. Bevorzugt ist die Solaranlage von einer Photovoltaikanlage gebildet. Besonders bevorzugt ist die Solaranlage insbesondere zu einer direkten Umwandlung von Lichtenergie, insbesondere aus Sonnenlicht, in elektrische Energie mittels Solarzellen vorgesehen. Dadurch kann insbesondere ein vorteilhaft autarker Betrieb der Reinigungsvorrichtung ermöglicht werden. Es kann insbesondere ein Betrieb der Reinigungsvorrichtung unabhängig von herkömmlichen Stromquellen erreicht werden. Hierdurch ist die Reinigungsvorrichtung für den Einsatz in Gebieten, insbesondere in Krisengebieten, mit verminderter Infrastruktur sowie im Bereich der Raumfahrt, wie beispielsweise bei Explorationsthemen wie "Mission to Mars" oder "Colonization of the Moon", geeignet, wo herkömmliche Reinigungsverfahren nur schwer zu verwirklichen sind.

Es wird weiter vorgeschlagen, dass die Reinigungsvorrichtung zumindest eine weitere Spannungsquelle aufweist, welche von einem Energiespeicher gebildet ist und dazu vorgesehen ist, in zumindest einem zweiten, von dem ersten Betriebszustand verschiedenen Betriebszustand eine Spannung an den Elektroden der zumindest einen Membraneinheit bereitzustellen. Es sind verschiedene, einem Fachmann als sinnvoll erscheinende Energiespeicher denkbar. Vorzugsweise ist der Energiespeicher von einer Batterie, insbesondere von einem Akkumulator gebildet. Bevorzugt dient die weitere Spannungsquelle zu einer Bereitstellung einer Spannung, wenn von der ersten Spannungsquelle keine Energie geliefert werden kann. Die weitere Spannungsquelle kann insbesondere zu einer Realisierung eines Nachtbetriebs verwendet werden. Die weitere Spannungsquelle dient insbesondere zu einer Energiebereitstellung, wenn von der ersten Spannungsquelle, insbesondere einer Solaranlage, keine oder nicht ausreichend Energie bereitgestellt wird. Hierdurch kann insbesondere eine vorteilhaft autarke Reinigungsvorrichtung bereitgestellt werden. Es kann insbesondere ein Betrieb der Reinigungsvorrichtung unabhängig von herkömmlichen Stromquellen erreicht werden. Hierdurch ist die Reinigungsvorrichtung für den Einsatz in Gebieten, insbesondere in Krisengebieten, mit verminderter Infrastruktur sowie im Bereich der Raumfahrt geeignet.

Ferner wird vorgeschlagen, dass der erste Aufnahmebereich an einer Unterseite durch die elektroosmotische Membran begrenzt ist und der zweite Aufnahmebereich zumindest teilweise unterhalb des ersten Aufnahmebereichs angeordnet ist. Vorzugsweise bildet die elektroosmotische Membran eine Grundseite des ersten Aufnahmebereichs aus. Bevorzugt ist die elektroosmotische Membran in vertikaler Richtung zwischen dem ersten Aufnahmebereich und dem zweiten Aufnahmebereich angeordnet. Die Begriffe "Unterseite" und "vertikal" sind in diesem Zusammenhang insbesondere auf eine vorgesehene Betriebsstellung auf einem ebenen Untergrund bezogen, wobei der Untergrund eine Horizontale definiert und eine Aufstellfläche bildet. Bevorzugt ist die elektroosmotische Membran in einem gefüllten Zustand des ersten Aufnahmebereichs vollständig mit der verunreinigten Flüssigkeit benetzt, wobei die gereinigte Flüssigkeit in einem Pumpbetrieb der Membraneinheit von der elektroosmotischen Membran in den zweiten Aufnahmebereich abtropfen kann. Dadurch kann insbesondere eine vorteilhafte Anordnung der elektroosmotischen Membran bereitgestellt werden. Es kann insbesondere eine Anordnung erreicht werden, bei welcher die elektroosmotische Membran unabhängig von einem Füllstand des ersten Aufnahmebereichs vollständig mit Flüssigkeit benetzt ist. Dadurch kann insbesondere eine vorteilhaft effiziente Reinigungsvorrichtung bereitgestellt werden.

Des Weiteren wird vorgeschlagen, dass die zumindest eine elektroosmotische Membran den ersten Aufnahmebereich in zumindest einer Ebene zumindest im Wesentlichen vollständig umschließt. Vorzugsweise ist die elektroosmotische Membran in der zumindest einen Ebene zumindest im Wesentlichen vollständig von dem zweiten Aufnahmebereich umgeben. Bevorzugt ist die Ebene von einer horizontalen Ebene gebildet. Besonders bevorzugt umschließt die zumindest eine elektroosmotische Membran den ersten Aufnahmebereich in horizontaler Richtung zumindest im Wesentlichen vollständig. Vorzugsweise erstreckt sich der zweite Aufnahmebereich ringförmig um den ersten Aufnahmebereich. Unter "zumindest im Wesentlichen vollständig umschließen" soll in diesem Zusammenhang insbesondere verstanden werden, dass ein Bauteil und/oder ein Bereich, insbesondere ausgehend von einem geometrischen Mittelpunkt des Bauteils und/oder des Bereichs, über einen Winkelbereich von zumindest 180°, vorzugsweise von zumindest 270° und besonders bevorzugt 360° von einem weiteren Bauteil und/oder Bereich umgeben, insbesondere begrenzt, ist. Dadurch kann insbesondere eine vorteilhafte Anordnung der elektroosmotischen Membran bereitgestellt werden. Es kann insbesondere eine vorteilhaft integrierte Anordnung des ersten Aufnahmebereichs erreicht werden. Hierdurch kann insbesondere eine vorteilhaft kompakte Reinigungsvorrichtung bei einer gleichzeitig vorteilhaft großen elektroosmotischen Membranoberfläche bereitgestellt werden. Insbesondere besteht durch die Steuerung des elektroosmotischen Effekts direkt an der elektroosmotischen Membran insbesondere eine weitgehende Freiheit in der Geometrie der Reinigungsvorrichtung, da die elektroosmotischen Membran in beliebiger Form angeordnet werden kann.

Es wird ferner vorgeschlagen, dass die zumindest eine elektroosmotische Membran eine hohlzylindrische Grundform aufweist. Vorzugsweise ist der erste Aufnahmebereich zylindrisch ausgebildet, wobei die elektroosmotische Membran den ersten Aufnahmebereich hohlzylindrisch umschließt. Bevorzugt weist der zweite Aufnahmebereich ebenfalls eine hohlzylindrische Grundform auf und umschließt die elektroosmotische Membran. Dadurch kann insbesondere eine vorteilhaft raumeffiziente elektroosmotische Membran bereitgestellt werden. Hierdurch kann insbesondere eine vorteilhaft kompakte Reinigungsvorrichtung bei einer gleichzeitig vorteilhaft großen elektroosmotischen Membranoberfläche bereitgestellt werden. Hierdurch kann wiederum eine Erhöhung der Filtrationsrate erreicht werden. Insbesondere besteht durch die Steuerung des elektroosmotischen Effekts direkt an der elektroosmotischen Membran insbesondere eine weitgehende Freiheit in der Geometrie der Reinigungsvorrichtung, da die elektroosmotischen Membran in beliebiger Form angeordnet werden kann. Ferner kann dadurch insbesondere eine vorteilhaft stabile elektroosmotische Membran bereitgestellt werden. Es kann insbesondere eine selbsttragende elektroosmotische Membran bereitgestellt werden.

Es wird weiter vorgeschlagen, dass die Reinigungsvorrichtung eine Steuer- und/oder Regeleinheit aufweist, welche dazu vorgesehen ist, eine Ansteuerung der elektroosmotischen Membran über Elektroden zu steuern und/oder zu regeln. Vorzugsweise ist die Steuer- und/oder Regeleinheit dazu vorgesehen, ein Anlegen einer Spannung an die Elektroden der Membraneinheit zu steuern. Bevorzugt ist die Steuerund/oder Regeleinheit dazu vorgesehen, einen elektroosmotischen Effekt und damit eine Pumpwirkung der elektroosmotischen Membran zu steuern und/oder zu regeln. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Dadurch kann insbesondere eine vorteilhaft gezielte Steuerung und/oder Regelung der Reinigungsvorrichtung erreicht werden.

Ferner wird vorgeschlagen, dass eine Porengröße der elektroosmotischen Membran an eine zu reinigende Flüssigkeit angepasst ist. Vorzugsweise hängt der elektroosmotische Effekt von der Porengröße ab, wobei insbesondere kleine Poren, insbesondere Poren mit wenigen Mikrometern Durchmesser und geringer, effizienter sind als große. Kleinere Poren bieten jedoch insbesondere einen größeren Strömungswiderstand aufgrund der Viskosität der Flüssigkeit. Durch geeignete Wahl der Porengröße können insbesondere sowohl die Pump- als auch die Trenneigenschaften der elektroosmotischen Membran definiert werden. Bevorzugt können abhängig von der Porengröße die unterschiedlichsten Stoffe durch die elektroosmotische Membran abgetrennt werden. Erfindungsgemäß ist die Porengröße von 0,1 bis 2 µm, so können beispielsweise Bakterien, Protozoen, das heißt insbesondere Einzeller wie beispielswiese Cryptosporidien oder Amöben, Hefen, Pilze und deren Sporen, Pollen, Würmer aller Art und deren Eier, insbesondere Nematoden und deren Eier, kleine Arthropoden aller Art und deren Eier, Fasern, insbesondere organische und anorganische, Partikel aller Art, insbesondere sowohl organische als auch anorganische, und/oder Schwebstoffe aller Art, insbesondere sowohl organische als auch anorganische, abgetrennt werden. Bei einer Porengröße von weniger als 0,1 µm können dagegen beispielsweise Viren, Proteine, Antikörper, DNA, RNA, Partikel aller Art, insbesondere sowohl organische als auch anorganische, und/oder Schwebstoffe aller Art, insbesondere sowohl organische als auch anorganische, abgetrennt werden. Besonders bevorzugt wäre dabei insbesondere denkbar, dass die elektroosmotische Membran der Reinigungsvorrichtung austauschbar ausgebildet ist. Hierdurch kann insbesondere eine vielseitige Anwendung der Reinigungsvorrichtung erreicht werden. Es kann insbesondere ein vorteilhaft modularer Aufbau bereitgestellt werden. Vorzugsweise kann insbesondere abhängig von einer Anwendung eine Pumpleistung optimiert werden.

Vorzugsweise wird in dem Reinigungsschritt mittels einer Spannungsquelle eine Spannung an gegenüberliegenden Elektroden der elektroosmotischen Membran angelegt. Dadurch kann insbesondere vorteilhaft eine effektive und energieeffiziente Abtrennung von Verunreinigungen, insbesondere von Mikroorganismen, aus Flüssigkeiten erreicht werden. Ferner können dadurch vorteilhaft Flüssigkeiten effektiv ohne eine zusätzliche Pumpe von mikrobiologischen Verunreinigungen befreit werden.

Es wird ferner vorgeschlagen, dass in einem weiteren Reinigungsschritt zu einer Reinigung der elektroosmotischen Membran die an den Elektroden angelegte Spannung umgepolt und dadurch der elektroosmotische Transport umgekehrt wird. Vorzugsweise wird bei einer normalen Polung der Elektroden der elektroosmotischem Membran Flüssigkeit von dem ersten Aufnahmebereich in den zweiten Aufnahmebereich transportiert. Bevorzugt wird durch die Umpolung zumindest temporär Flüssigkeit mittels der elektroosmotischen Membran von dem zweiten Aufnahmebereich in den ersten Aufnahmebereich transportiert, wobei hierdurch insbesondere Verunreinigungen, welche sich auf einer dem ersten Aufnahmebereich zugewandten Oberfläche der elektroosmotischen Membran abgesetzt haben, von der elektroosmotischen Membran abgelöst werden. Bevorzugt wird in einem weiteren Reinigungsschritt zu einer Reinigung der elektroosmotischen Membran die an den Elektroden angelegte Spannung temporär, insbesondere für eine definierte Zeitdauer, umgepolt. Hierdurch kann insbesondere eine Reinigung der elektroosmotischem Membran erreicht werden. Es kann insbesondere durch eine einfache Umpolung des elektrischen Feldes an der elektroosmotischen Membran eine Reinigung der elektroosmotischen Membran ermöglicht werden. Ferner kann insbesondere ein sanftes Ablösen beispielsweise von Mikroorganismen von der elektroosmotischen Membran erreicht werden, sodass insbesondere die Mikroorganismen ihre Vitalität behalten. Dieser Aspekt kann beispielsweise für den Zweck einer Detektion und/oder Identifikation der Organismen genutzt werden.

Es wird weiter vorgeschlagen, dass in einem auf den weiteren Reinigungsschritt folgenden Analyseschritt die in dem Reinigungsschritt von der elektroosmotischen Membran abgelösten Mikroorganismen, wie insbesondere Bakterien, mikrobiologisch analysiert werden. Vorzugsweise durch die Umpolung der angelegten Spannung wird der Fluss durch die elektroosmotischen Membran umgekehrt, sodass sich die Mikroorganismen, insbesondre Bakterien, effektiv von der elektroosmotischen Membran ablösen. Diese Eigenschaft wird dazu genutzt, dass die auf der Membran liegenden Mikroorganismen für eine mikrobiologische Analyse verwendet werden können. Durch diese Anreicherung werden die Mikroorganismen, insbesondere die Bakterien in ihrer Vitalität nicht beeinträchtigt. Vorzugsweise kann das Verfahren mit der Reinigungsvorrichtung insbesondere in einem kleinen Maßstab speziell für mikrobiologische Laboranalysen genutzt werden. Das effektive Ablösen der Bakterien durch einfache Umpolung erleichtert dabei eine Automatisierung der mikrobiologischen Analyse. Es sind verschiedene, einem Fachmann als sinnvoll erscheinende Methoden zur mikrobiologischen Analyse der Mikroorganismen denkbar, wie beispielsweise Polymerase-Kettenreaktion (PCR), Enzyme-Iinked Immunosorbent Assay (ELISA) oder die Kultivierung auf Markerplatten. Dadurch kann insbesondere eine vorteilhafte Untersuchung der abgelösten Mikroorganismen erreicht werden.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine Reinigungsvorrichtung mit einem ersten Aufnahmebereich, mit einem zweiten Aufnahmebereich, mit einer Membraneinheit, mit einer Spannungsquelle und mit einer weiteren Spannungsquelle in einer schematischen Darstellung,
- Fig. 2: eine elektroosmotische Membran der Membraneinheit der Reinigungsvorrichtung in einer schematischen Darstellung,
- Fig. 3: die Membraneinheit der Reinigungsvorrichtung mit der elektroosmotischen Membran, die eine erste Elektrode und eine zweite Elektrode umfasst, in einer schematischen Darstellung,
- Fig. 4: eine schematische Funktionsdarstellung eines elektroosmotischen Flusses durch eine Pore in der elektroosmotischen Membran,
- Fig. 5: ein schematisches Ablaufdiagramm eines Verfahrens zu einem Betrieb der Reinigungsvorrichtung und
- Fig. 6: eine weitere Reinigungsvorrichtung mit einem ersten Aufnahmebereich, mit einem zweiten Aufnahmebereich, mit einer Membraneinheit, mit einer Spannungsquelle und mit einer weiteren Spannungsquelle in einer schematischen Darstellung.

### Beschreibung der Ausführungsbeispiele

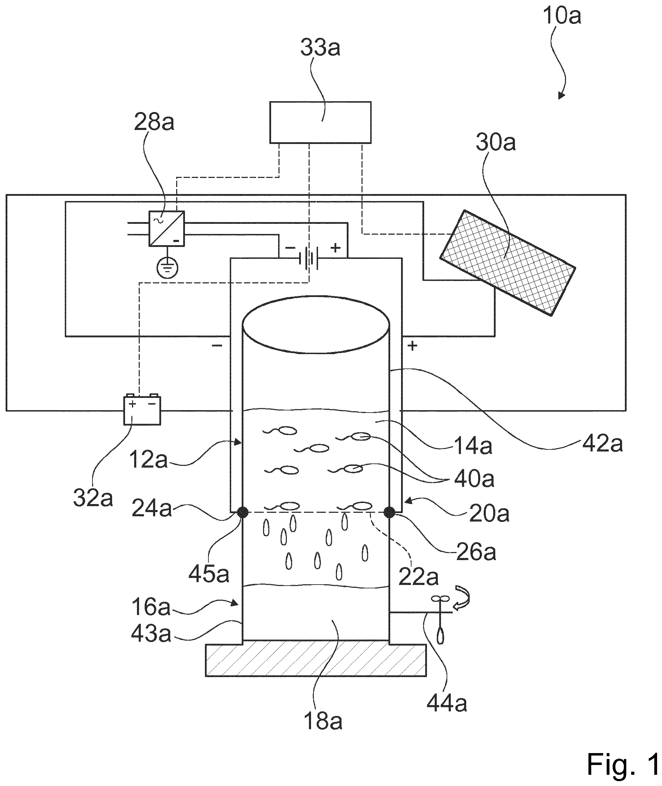

Figur 1 zeigt eine Reinigungsvorrichtung 10a. Die Reinigungsvorrichtung 10 ist zu einer Reinigung von Flüssigkeiten, insbesondere von verunreinigtem Wasser, vorgesehen. Es sind verschiedene, einem Fachmann als sinnvoll erscheinende Anwendungen der Reinigungsvorrichtung 10a denkbar, wie beispielsweise zu der Entfernung von Mikroorganismen 40a aus Trinkwasser, insbesondere zu der Entfernung von Bakterien, Protozoen, Hefen, Viren, Pilzen, Pilzsporen und/oder Algen.

Die Reinigungsvorrichtung 10a weist einen ersten Aufnahmebereich 12a zu einer Aufnahme einer verunreinigten Flüssigkeit 14a auf. Ferner weist die Reinigungsvorrichtung 10a einen zweiten Aufnahmebereich 16a zu einer Aufnahme einer gereinigten Flüssigkeit 18a auf. Der erste Aufnahmebereich 12a und der zweite Aufnahmebereich 16a sind jeweils in einem Behälter 42a, 43a angeordnet, welche die zwei Aufnahmebereiche 12a, 16a jeweils zumindest teilweise begrenzen. Die Behälter 42a, 43a sind beispielhaft von einem zylindrischen, wasserundurchlässigen Gefäß gebildet. Grundsätzlich wäre jedoch auch eine getrennte Ausbildung der Aufnahmebereiche 12a, 16a denkbar. Die Behälter 42a, 43a sind deckungsgleich ausgebildet. Ferner bestehen die Behälter 42a, 43a aus Kunststoff. Es wäre jedoch auch eine andere, einem Fachmann als sinnvoll erscheinende Materialgebung der Behälter 43a, 43a denkbar. Der erste Aufnahmebereich 12a und der zweite Aufnahmebereich 16a sind jeweils von zylindrischen Bereichen gebildet, welche zumindest an einer Mantelfläche durch den jeweils zugeordneten Behälter 42a, 43a begrenzt sind. Die Aufnahmebereiche 12a, 16a sind übereinander angeordnet. Grundsätzlich wäre jedoch auch eine andere, einem Fachmann als sinnvoll erscheinende Ausgestaltung denkbar. Die Behälter 42a, 43a sind übereinander angeordnet. Der Behälter 43a weist im Bereich des zweiten Aufnahmebereichs 16a ein Entnahmemittel 44a auf, über welches die gereinigte Flüssigkeit 18a aus dem zweiten Aufnahmebereich 16a entnommen werden kann. Das Entnahmemittel 44a ist beispielhaft von einem Wasserhahn gebildet. Grundsätzlich wäre jedoch auch denkbar, dass das Entnahmemittel 44a beispielsweise von einem Ventil gebildet ist, über welches die gereinigte Flüssigkeit 18a in einen weiteren Behälter geführt wird. Abschließend weist der Behälter 43a insbesondere einen stabilen Standfuß bzw. Sockel auf, der die Entnahme über das Entnahmemittel 44a vereinfacht.

Des Weiteren weist die Reinigungsvorrichtung 10a eine zwischen dem ersten Aufnahmebereich 12a und dem zweiten Aufnahmebereich 16a angeordnete Membraneinheit 20a auf, welche teilweise als Trennmedium zwischen dem ersten Aufnahmebereich 12a und dem zweiten Aufnahmebereich 16a dient. Die Membraneinheit 20a umfasst eine elektroosmotische Membran 22a. Die elektroosmotische Membran 22a dient als Trennmedium zwischen den zwei Aufnahmebereichen 12a, 16a. Der erste Aufnahmebereich 12a ist an einer Unterseite durch die elektroosmotische Membran 22a begrenzt. Ferner ist der zweite Aufnahmebereich 16a unterhalb des ersten Aufnahmebereichs 12a angeordnet. Die elektroosmotische Membran 22a bildet eine Grundseite des ersten Aufnahmebereichs 12a aus, wobei eine Mantelfläche des ersten Aufnahmebereichs 12a durch den Behälter 42a begrenzt ist. Die elektroosmotische Membran 22a bildet eine Grundseite des Behälters 42a aus. Die elektroosmotische Membran 22a ist über eine Dichtung 45a an den Behälter 42a angebunden. Die Dichtung 45a ist beispielhaft von einem O-Ring gebildet. Die elektroosmotische Membran 22a ist in vertikaler Richtung zwischen dem ersten Aufnahmebereich 12a und dem zweiten Aufnahmebereich 16a angeordnet.

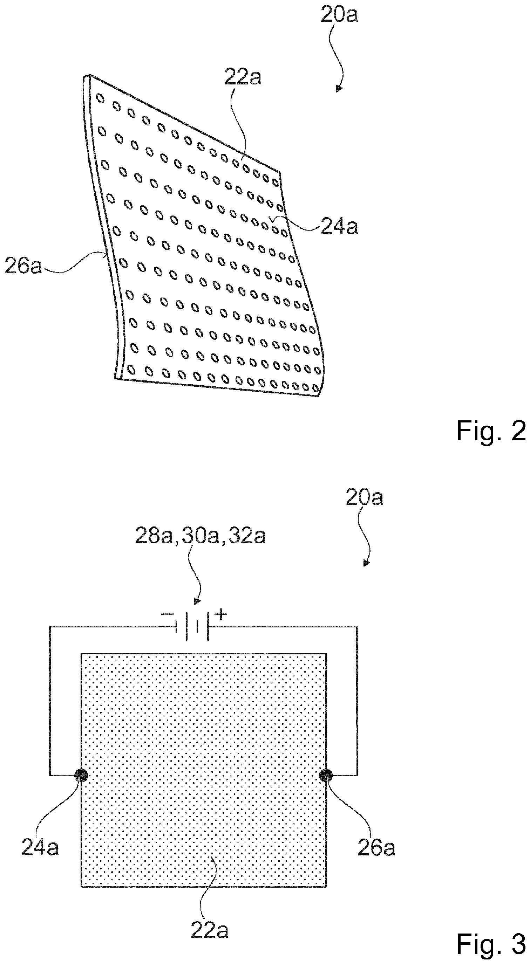

Die elektroosmotische Membran 22a weist an einer ersten Oberfläche eine erste Elektrode 24a auf. Ferner weist die elektroosmotische Membran 22a an einer der ersten Oberfläche gegenüberliegenden zweiten Oberfläche eine zweite Elektrode 26a auf. Die elektroosmotische Membran 22a ist bei einem Anlegen einer Spannung dazu vorgesehen, mittels eines elektroosmotischen Effekts Flüssigkeit von dem ersten Aufnahmebereich 12a in den zweiten Aufnahmebereich 16a zu transportieren. Vorzugsweise tropft die gereinigte Flüssigkeit 18a in dem zweiten Aufnahmebereich 16a insbesondere von der elektroosmotischen Membran 22a ab und wird dort aufgefangen. Die Poren 48a der elektroosmotischen Membran 22a wirken sowohl als Pumpe, als auch als Trennmedium. Die erste Elektrode 24a und die zweite Elektrode 26a sind von einer Beschichtung aus einem inerten, leitenden Material, wie beispielsweise Gold, auf einem Grundmaterial der elektroosmotischen Membran 22a gebildet. Es sind verschiedene, einem Fachmann als sinnvoll erscheinende Grundmaterialien für die elektroosmotische Membran 22a denkbar, wie insbesondere Polydimethylsiloxan (PDMS), Polycarbonat, Polyester, Nafion oder Nylon. Die elektroosmotische Membran 22a weist eine Dicke zwischen 20 und 200 µm auf. Ferner weist die elektroosmotische Membran 22a ein Gewicht von ca. 25g pro m² auf. Die elektroosmotische Membran 22a kann zudem überschichtet mit Gewebe ausgebildet sein. Hierdurch könnte insbesondere eine Gewebeverstärkung der elektroosmotischen Membran 22a erreicht werden. Die Gewebe sind dabei insbesondere leitfähig und unterstützen sozusagen die Stromverteilung auf den goldbedampften Oberflächen der elektroosmotischen Membran 22a (Figuren 2, 3).

Des Weiteren weist die elektroosmotische Membran 22a eine Porengröße zwischen 0,1 und 2 µm auf. Eine Porengröße der elektroosmotischen Membran 22a ist an eine zu reinigende Flüssigkeit 14a angepasst. Der elektroosmotische Effekt der elektroosmotischen Membran 22a hängt von der Porengröße ab, wobei insbesondere kleine Poren, insbesondere Poren mit wenigen Mikrometern Durchmesser und geringer, effizienter sind als große. Kleinere Poren bieten jedoch einen größeren Strömungswiderstand aufgrund der Viskosität der Flüssigkeit. Durch geeignete Wahl der Porengröße können sowohl die Pump- als auch die Trenneigenschaften der elektroosmotischen Membran definiert werden. Bevorzugt können abhängig von der Porengröße die unterschiedlichsten Stoffe durch die elektroosmotische Membran 22a abgetrennt werden. Bei einer Porengröße von 0,1 bis 2 µm können Bakterien, Protozoen, das heißt insbesondere Einzeller wie beispielswiese Cryptosporidien oder Amöben, Hefen, Pilze und deren Sporen, Pollen, Würmer aller Art und deren Eier, insbesondere Nematoden und deren Eier, Kleine Arthropoden aller Art und deren Eier, Fasern, insbesondere organische und anorganische, Partikel aller Art, insbesondere sowohl organische als auch anorganische, und/oder Schwebstoffe aller Art, insbesondere sowohl organische als auch anorganische, abgetrennt werden. Bei einer Porengröße von weniger als 0,1 µm können dagegen beispielsweise Viren, Proteine, Antikörper, DNA, RNA, Partikel aller Art, insbesondere sowohl organische als auch anorganische, und/oder Schwebstoffe aller Art, insbesondere sowohl organische als auch anorganische, abgetrennt werden. Grundsätzlich wäre denkbar, dass die elektroosmotische Membran 22a austauschbar, wie insbesondere als Modul austauschbar, ausgebildet ist.

Ferner weist die Reinigungsvorrichtung 10a zumindest eine Spannungsquelle 28a, 30a auf, welche in einem ersten Betriebszustand dazu vorgesehen ist, eine Spannung an den Elektroden 24a, 26a der Membraneinheit 20a bereitzustellen. Die Reinigungsvorrichtung 10a weist zwei Spannungsquellen 28a, 30a auf, welche in einem ersten Betriebszustand dazu vorgesehen sind, eine Spannung an Elektroden 24a, 26a der Membraneinheit 20a bereitzustellen. Eine erste Spannungsquelle 28a ist von einem Netzgerät mit einer Schutzerdung. Die erste Spannungsquelle 28a dient zu einer Spannungsversorgung der Membraneinheit 20a, wenn ein Stromnetz vorhanden ist. Eine zweite Spannungsquelle 30a ist von einer Solaranlage gebildet. Die zweite Spannungsquelle 30a ist von einer Photovoltaikanlage gebildet. Die erste Spannungsquelle 28a dient zu einer Spannungsversorgung der Membraneinheit 20a, wenn ausreichend Sonnenlicht vorhanden ist und/oder ein autarker Betrieb der Reinigungsvorrichtung 10a notwendig ist. Die Reinigungsvorrichtung 10a weist ferner eine weitere Spannungsquelle 32a auf, welche von einem Energiespeicher gebildet ist. Die weitere Spannungsquelle 32a ist von einem Akkumulator gebildet. Die weitere Spannungsquelle 32a ist dazu vorgesehen ist, in zumindest einem zweiten, von dem ersten Betriebszustand verschiedenen Betriebszustand eine Spannung an den Elektroden 24a, 26a der Membraneinheit 20a bereitzustellen. Die weitere Spannungsquelle 32a dient zu einer Bereitstellung einer Spannung, wenn von der ersten Spannungsquelle 28a oder der zweiten Spannungsquelle 30a keine Energie geliefert werden kann. Die weitere Spannungsquelle 32a dient bei einem autarken Betrieb der Reinigungsvorrichtung 10a zu einer Energiebereitstellung, wenn von der zweiten Spannungsquelle 30a, also der Solaranlage, keine oder nicht ausreichend Energie bereitgestellt wird. Die weitere Spannungsquelle 32a dient dabei insbesondere zu einer Realisierung eines Nachtbetriebs. Die Spannungsquellen 28a, 30a, 32a sind jeweils parallel geschaltet und jeweils mit den Elektroden 24a, 26a der Membraneinheit 20a verkabelt, insbesondere über geeignete Kabel. Grundsätzlich wäre jedoch auch denkbar, dass die Reinigungsvorrichtung 10a lediglich eine oder zwei der Spannungsquellen 28a, 30a, 32a aufweist. Die Reinigungsvorrichtung 10a kann insbesondere abhängig von einer Anwendung mit verschiedenen Spannungsquellen 28a, 30a, 32a ausgestattet werden.

Die Spannungsquellen 28a, 30a, 32a dienen jeweils zu einer Bereitstellung von einer Spannung von 1,0 bis 10 Volt. Eine minimale Betriebsspannung der Membraneinheit 20a beträgt insbesondere ca. 1,2 Volt. Ferner weist die Membraneinheit 20a beispielhaft eine Transportleistung von bis zu 30 Liter/m² in der Stunde bei 1,5 Volt und von bis zu 200 Liter/m² in der Stunde bei 2,5 Volt auf. Zudem ist mittels der Membraneinheit 20a ein Druck von ca. 50 cm Wassersäule erreichbar.

Des Weiteren weist die Reinigungsvorrichtung 10a eine Steuer- und Regeleinheit 33a auf, welche dazu vorgesehen ist, eine Ansteuerung der elektroosmotischen Membran 22a über die Elektroden 24a, 26a zu steuern. Die Steuer- und Regeleinheit 33a ist dazu vorgesehen, den Fluss 46a der Flüssigkeit durch die elektroosmotische Membran 22a gezielt zu steuern. Die Steuerung beinhaltet dabei insbesondere sowohl die Richtung des Flusses 46a als auch dessen Geschwindigkeit. Vorzugsweise ist die Steuer- und Regeleinheit 33a zudem mit einer nicht weiter dargestellten Bedieneinheit gekoppelt, über welche die Reinigungsvorrichtung 10a von einem Bediener gesteuert werden kann und/oder von einem Bediener Vorgaben festgelegt werden können. Die Steuer- und Regeleinheit 33a ist zu einer Steuerung der Reinigungsvorrichtung 10a mit den Spannungsquellen 28a, 30a, 32a gekoppelt.

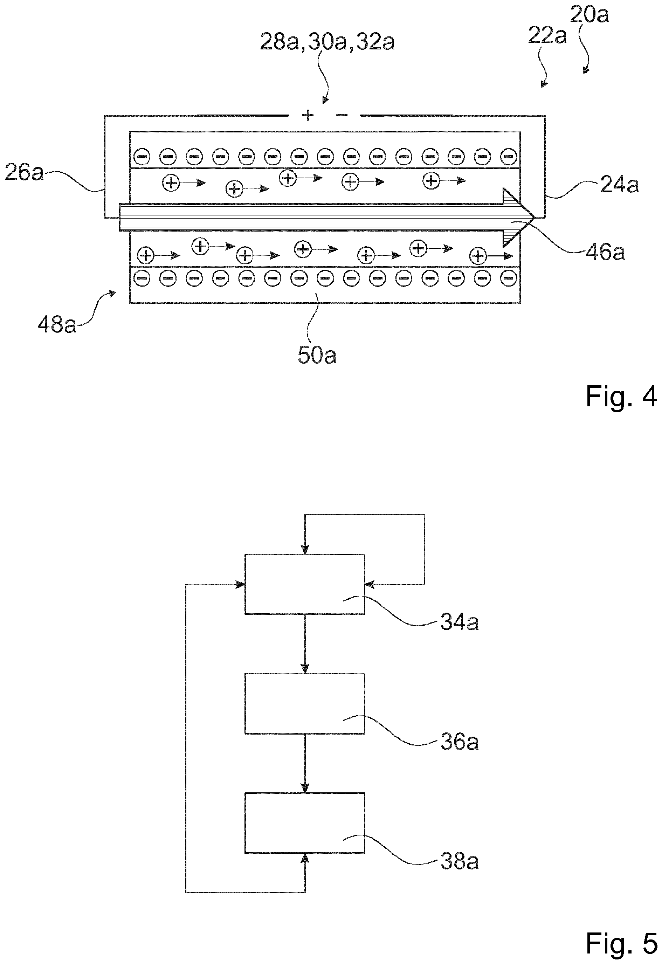

Figur 5 zeigt ein schematisches Ablaufdiagramm eines Verfahrens zu einem Betrieb der Reinigungsvorrichtung 10a. Das Verfahren dient zu einer Reinigung von Flüssigkeiten, insbesondere von verunreinigtem Wasser.

Bei dem Verfahren wird in einem Reinigungsschritt 34a zu einer Reinigung einer verunreinigten Flüssigkeit 14a in dem ersten Aufnahmebereich 12a eine Spannung an die Elektroden 24a, 26a der elektroosmotischen Membran 22a angelegt und mittels eines elektroosmotischen Effekts Flüssigkeit von dem ersten Aufnahmebereich 12a in den zweiten Aufnahmebereich 16a transportiert. Die Porenwände 50a der Pore 48a der elektroosmotischen Membran 22a tragen aufgrund ihrer Materialeigenschaften negative Ladungen. An diese fest gebundenen negativen Ladungen lagern sich frei bewegliche, dissoziierte positive Ladungen aus der Flüssigkeit, welche die Pore 48a füllt, an. In dem Reinigungsschritt 34a wird nun an den äußeren Enden der Pore 48a mittels der Elektroden 24a, 26a ein elektrisches Feld angelegt, sodass die frei beweglichen positiven Ladungen entlang der Porenwand 50a zum negativen Pol wandern und dabei die gesamte Flüssigkeit in der Pore 48a mitreißen. Es ergibt sich dadurch eine Flüssigkeitspumpe ohne bewegliche Teile. Besonders ist dabei, dass die so entstehende Flüssigkeitsbewegung über den ganzen Querschnitt der Pore gleichförmig ist. Bei der elektroosmotischen Membran 22a wirken die Poren 48a gleichzeitig sowohl als Pumpe als auch als Trennmedium. Hierbei werden die Mikroorganismen 40a durch die elektroosmotische Membran 22a von der Flüssigkeit separiert, wobei sich die Mikroorganismen 40a auf der Oberfläche der elektroosmotischen Membran 22a, die Kontakt mit der verschmutzten Flüssigkeit 14a hat, anreichern (Figur 4).

Der Reinigungsschritt 34a stellt einen Grundbetrieb dar. Die Reinigungsvorrichtung 10a kann dabei insbesondere kontinuierlich in dem Reinigungsschritt 34a betrieben werden, so dass permanent verschmutztes Wasser in den Behälter 42a eingefüllt und gereinigtes Wasser entnommen werden kann. Das gereinigte Wasser kann dann in einen sauberen Tank überführt werden, so dass permanent Wasser in Trinkwasserqualität entnommen werden kann.

In einem weiteren Reinigungsschritt 36a des Verfahrens zu einer Reinigung der elektroosmotischen Membran 22a wird die an den Elektroden 24a angelegte Spannung umgepolt. Bei einer normalen Polung der Elektroden 24a, 26a der elektroosmotischem Membran 22a, wie insbesondere bei einem Grundbetrieb bei dem Reinigungsschritt 34a, wird Flüssigkeit von dem ersten Aufnahmebereich 12a in den zweiten Aufnahmebereich 16a transportiert. Durch die Umpolung wird temporär Flüssigkeit, sofern an der elektroosmotischen Membran 22a anliegend, mittels der elektroosmotischen Membran 22a von dem zweiten Aufnahmebereich 16a in den ersten Aufnahmebereich 12a transportiert, wobei hierdurch Verunreinigungen, insbesondere Mikroorganismen 40a welche sich auf einer dem ersten Aufnahmebereich 12a zugewandten Oberfläche der elektroosmotischen Membran 22a abgesetzt haben, von der elektroosmotischen Membran 22a abgelöst werden. In dem weiteren Reinigungsschritt 36a wird zu einer Reinigung der elektroosmotischen Membran 22a daher die an den Elektroden 24a, 26a angelegte Spannung temporär, insbesondere für eine definierte Zeitdauer, umgepolt.

Anschließend können die abgelösten Mikroorganismen zu einer Analyse genutzt werden, falls dies vorgesehen ist. Alternativ wäre jedoch auch denkbar, dass die verunreinigte Flüssigkeit 14a in dem ersten Aufnahmebereich 12a, welche durch den Reinigungsschritt 34a nun eine erhöhte Verunreinigung aufweist, ersetzt oder verdünnt wird. Zu einer Analyse wird in einem auf den weiteren Reinigungsschritt 36a folgenden Analyseschritt 38a die in dem Reinigungsschritt 36a von der elektroosmotischen Membran 22a abgelösten Mikroorganismen 40a mikrobiologisch analysiert. Es sind verschiedene, einem Fachmann als sinnvoll erscheinende Methoden zur mikrobiologischen Analyse der Mikroorganismen denkbar, wie beispielsweise Polymerase-Kettenreaktion (PCR), Enzyme-Iinked Immunosorbent Assay (ELISA) oder die Kultivierung auf Markerplatten.

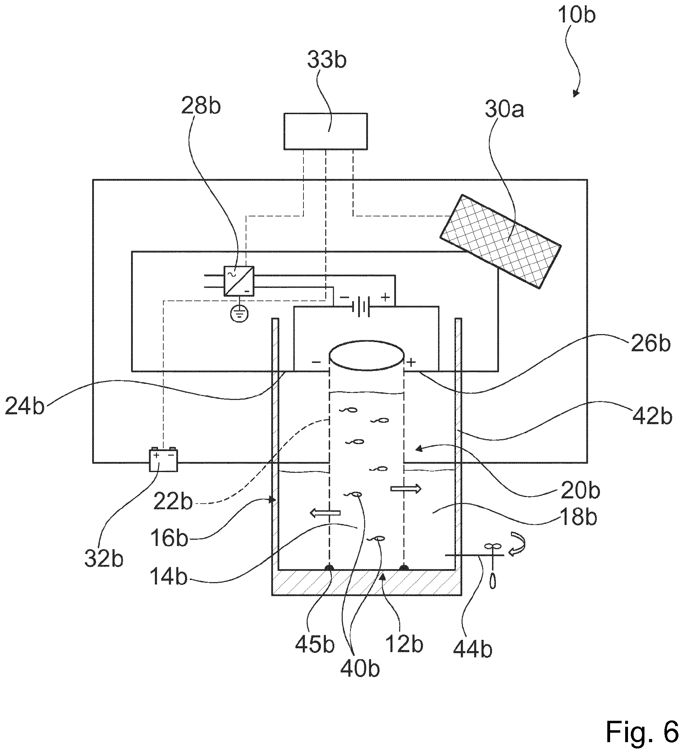

In der Figur 6 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 5 verwiesen werden kann. Zur Unterscheidung der Ausführungsbeispiele ist der Buchstabe a in den Bezugszeichen des Ausführungsbeispiels in den Figuren 1 bis 5 durch den Buchstaben b in den Bezugszeichen des Ausführungsbeispiels der Figur 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 5 verwiesen werden.

Figur 6 zeigt eine Reinigungsvorrichtung 10b. Die Reinigungsvorrichtung 10b ist zu einer Reinigung von Flüssigkeiten, insbesondere von verunreinigtem Wasser, vorgesehen. Die Reinigungsvorrichtung 10b weist einen ersten Aufnahmebereich 12b zu einer Aufnahme einer verunreinigten Flüssigkeit 14b auf. Ferner weist die Reinigungsvorrichtung 10b einen zweiten Aufnahmebereich 16b zu einer Aufnahme einer gereinigten Flüssigkeit 18b. Der erste Aufnahmebereich 12b und der zweite Aufnahmebereich 16b sind in einem gemeinsamen Behälter 42b angeordnet, welche die zwei Aufnahmebereiche 12b, 16b zumindest teilweise begrenzt. Der Behälter 42b ist beispielhaft von einem zylindrischen, wasserundurchlässigen Gefäß gebildet. Der erste Aufnahmebereich 12b ist von einem zylindrischen Bereich gebildet, wobei der zweite Aufnahmebereich 16b von einem den ersten Aufnahmebereich 12b umschließenden hohlzylindrischen Bereich gebildet ist, welcher an einer Mantelfläche den Behälter 42b begrenzt. Der Behälter 42b weist ein Entnahmemittel 44b auf, über welches die gereinigte Flüssigkeit 18b aus dem zweiten Aufnahmebereich 16b entnommen werden kann. Das Entnahmemittel 44b ist beispielhaft von einem Hahn gebildet.

Des Weiteren weist die Reinigung eine zwischen dem ersten Aufnahmebereich 12b und dem zweiten Aufnahmebereich 16b angeordnete Membraneinheit 20b auf, welche teilweise als Trennmedium zwischen dem ersten Aufnahmebereich 12b und dem zweiten Aufnahmebereich 16b dient. Die Membraneinheit 20b umfasst eine elektroosmotische Membran 22b. Die elektroosmotische Membran 22b dient als Trennmedium zwischen den zwei Aufnahmebereichen 12b, 16b. Die elektroosmotische Membran 22b umschließt den ersten Aufnahmebereich 12b in zumindest einer Ebene zumindest im Wesentlichen vollständig. Ferner ist die elektroosmotische Membran 22b in der zumindest einen Ebene zumindest im Wesentlichen vollständig von dem zweiten Aufnahmebereich 16b umgeben. Die elektroosmotische Membran 22b umschließt den ersten Aufnahmebereich 12b in horizontaler Richtung vollständig. Die elektroosmotische Membran 22b begrenzt eine Mantelfläche des ersten Aufnahmebereichs 12b. Ferner erstreckt sich der zweite Aufnahmebereich 16b ringförmig um den ersten Aufnahmebereich 12b, wobei die Aufnahmebereiche 12b, 16b durch die elektroosmotische Membran 22b getrennt sind. Die elektroosmotische Membran 22b weist eine hohlzylindrische Grundform auf. Grundsätzlich wäre jedoch auch eine andere, einem Fachmann als sinnvoll erscheinende Formgebung der Aufnahmebereich 12b, 16b und der elektroosmotischen Membran 22b denkbar. Insbesondere ist bei dem Ausführungsbeispiel jedoch wesentlich, dass einer der Aufnahmebereiche 12b, 16b von der elektroosmotischen Membran 22b umgeben ist und die elektroosmotische Membran 22a wiederum von dem weiteren Aufnahmebereich 12b, 16b umgeben ist.

Eine Verwendung mehrerer hohlzylindrischer elektroosmotischer Membranen 22b in einem Behälter 42b ist ebenfalls möglich. Diese Vervielfachung könnte nochmals die Filterleistung erhöhen. Weiterhin könnte bei einer flexiblen Stabilisierung die elektroosmotische Membran 22b zu einem Schlauch geformt werden. Dies hätte zur Folge, dass ein Einlegen des Schlauchs in Form einer Schnecke in den Behälter 42b nochmals die Membranoberfläche und somit auch die Filterkapazität erhöhen würde. Des Weiteren erhöht ein leichter atmosphärischer Druck von ca. 1 bar die Filtergeschwindigkeit.

Die elektroosmotischen Membran 22b ist über eine Dichtung 45b auf eine Grundseite des Behälters 42b aufgesetzt. Die Dichtung 45b ist beispielhaft von einem O-Ring gebildet. Die Dichtung 45b verbindet die stabilisierte elektroosmotischen Membran 22b fest mit dem Boden des Behälters 42b. Die elektroosmotische Membran 22b bildet den ersten Aufnahmebereich 12b in dem Behälter 42b aus.

Die elektroosmotische Membran 22b weist an einer ersten Oberfläche eine erste Elektrode 24b auf. Ferner weist die elektroosmotische Membran 22b an einer der ersten Oberfläche gegenüberliegenden zweiten Oberfläche eine zweite Elektrode 26b auf. Die elektroosmotische Membran 22b ist bei einem Anlegen einer Spannung dazu vorgesehen, mittels eines elektroosmotischen Effekts Flüssigkeit von dem ersten Aufnahmebereich 12b in den zweiten Aufnahmebereich 16b zu transportieren. Die Poren der elektroosmotischen Membran 22b wirken sowohl als Pumpe, als auch als Trennmedium.

### Bezugszeichen

- 10: Reinigungsvorrichtung
- 12: Aufnahmebereich
- 14: Flüssigkeit
- 16: Aufnahmebereich
- 18: Flüssigkeit
- 20: Membraneinheit
- 22: Membran
- 24: Elektrode
- 26: Elektrode
- 28: Spannungsquelle
- 30: Spannungsquelle
- 32: Spannungsquelle
- 33: Steuer- und Regeleinheit
- 34: Reinigungsschritt
- 36: Reinigungsschritt
- 38: Analyseschritt
- 40: Mikroorganismen
- 42: Behälter
- 43: Behälter
- 44: Entnahmemittel
- 45: Dichtung
- 46: Fluss
- 48: Pore
- 50: Porenwand

## Patentansprüche

1. Verwendung einer Reinigungsvorrichtung (10a; 10b) zur Reinigung von mit Mikroorganismen und/oder nicht belebten Schwebstoffen verunreinigtem Wasser, mit zumindest einem ersten Aufnahmebereich (12a; 12b) zu einer Aufnahme einer verunreinigten Flüssigkeit (14a; 14b), mit zumindest einem zweiten Aufnahmebereich (16a; 16b) zu einer Aufnahme einer gereinigten Flüssigkeit (18a; 18b) und mit einer zwischen dem ersten Aufnahmebereich (12a; 12b) und dem zweiten Aufnahmebereich (16a; 16b) angeordneten Membraneinheit (20a; 20b), wobei die zumindest eine Membraneinheit (20a; 20b) eine elektroosmotische Membran (22a; 22b) umfasst, welche zumindest teilweise als Trennmedium zwischen dem ersten Aufnahmebereich (12a; 12b) und dem zweiten Aufnahmebereich (16a; 16b) dient, und die elektroosmotische Membran (22a; 22b) an einer ersten Oberfläche eine erste Elektrode (24a; 24b) aufweist und die elektroosmotische Membran (22a; 22b) an einer der ersten Oberfläche gegenüberliegenden zweiten Oberfläche eine zweite Elektrode (26a; 26b) aufweist und die bei einem Anlegen einer Spannung dazu vorgesehen ist, mittels eines elektroosmotischen Effekts Flüssigkeit von dem ersten Aufnahmebereich (12a; 12b) in den zweiten Aufnahmebereich (16a; 16b) zu transportieren, **dadurch gekennzeichnet, dass** in einem Reinigungsschritt (34a) zu einer Reinigung des verunreinigten Wassers in dem ersten Aufnahmebereich (12a; 12b) eine Spannung an die Elektroden (24a, 26a; 24b, 26b) der elektroosmotischen Membran (22a; 22b) angelegt wird und mittels eines elektroosmotischen Effekts Wasser von dem ersten Aufnahmebereich (12a; 12b) in den zweiten Aufnahmebereich (16a; 16b) transportiert wird,
wobei durch geeignete Wahl der Porengröße der elektroosmotischen Membran (22a; 22b) sowohl die Pump- als auch die Trenneigenschaften der elektroosmotischen Membran (22a; 22b) definiert werden, wobei abhängig von der Porengröße unterschiedlichste Stoffe durch die elektroosmotische Membran (22a; 22b) abgetrennt werden, wobei die elektroosmotische Membran (22a) eine Porengröße zwischen 0,1 µm und 2 µm aufweist, wobei nur die elektroosmotische Membran (22a; 22b) als Trennmedium zwischen den Aufnahmebereichen (12a, 16a; 12b, 16b) dient.

2. Verwendung nach Anspruch 1, **dadurch gekennzeichnet, dass** in einem weiteren Reinigungsschritt (36a) zu einer Reinigung der elektroosmotischen Membran (22a; 22b) die an den Elektroden (24a, 26a) angelegte Spannung umgepolt wird.

3. Verwendung nach Anspruch 2, **dadurch gekennzeichnet, dass** in einem auf den weiteren Reinigungsschritt (36a) folgenden Analyseschritt (38a) die in dem Reinigungsschritt (36a) von der elektroosmotischen Membran (22a; 22b) abgelösten Mikroorganismen (40a; 40b) mikrobiologisch analysiert werden.

4. Verwendung nach einem der vorhergehenden Ansprüche, **dadurch gekennzeichnet, dass** die Reinigungsvorrichtung (10a; 10b) zumindest eine Spannungsquelle (28a, 30a; 28b, 30b) aufweist, welche in zumindest einem ersten Betriebszustand eine Spannung an die Elektroden (24a, 26a; 24b, 26b) der zumindest einen Membraneinheit (20a; 20b) bereitstellt.

5. Verwendung nach Anspruch 4, **dadurch gekennzeichnet, dass** die zumindest eine Spannungsquelle (30a; 30b) von einer Solaranlage gebildet ist.

6. Verwendung nach Anspruch 4 oder 5, **dadurch gekennzeichnet, dass** die Reinigungsvorrichtung (10a; 10b) zumindest eine weitere Spannungsquelle (32a; 32b) aufweist, welche von einem Energiespeicher gebildet ist, und welche in zumindest einem zweiten, von dem ersten Betriebszustand verschiedenen Betriebszustand eine Spannung an den Elektroden (24a, 26a; 24b, 26b) der zumindest einen Membraneinheit (20a; 20b) bereitstellt.

7. Verwendung nach einem der vorhergehenden Ansprüche, **dadurch gekennzeichnet, dass** die Reinigungsvorrichtung (10a; 10b) eine Steuerund/oder Regeleinheit (33a; 33b) umfasst, welche eine Ansteuerung der elektroosmotischen Membran (22a; 22b) über die Elektroden (24a, 26a; 24b, 26b) steuert und/oder regelt.

8. Verwendung nach einem der vorhergehenden Ansprüche, **dadurch gekennzeichnet, dass** der erste Aufnahmebereich (12a) an einer Unterseite durch die elektroosmotische Membran (22a) begrenzt ist und der zweite Aufnahmebereich (16a) zumindest teilweise unterhalb des ersten Aufnahmebereichs (12a) angeordnet ist.

9. Verwendung nach einem der vorhergehenden Ansprüche, **dadurch gekennzeichnet, dass** die zumindest eine elektroosmotische Membran (22b) den ersten Aufnahmebereich (12b) in zumindest einer Ebene zumindest im Wesentlichen vollständig umschließt.

10. Verwendung nach Anspruch 9, **dadurch gekennzeichnet, dass** die zumindest eine elektroosmotische Membran (22b) eine hohlzylindrische Grundform aufweist.

11. Verwendung nach einem der vorhergehenden Ansprüche, **dadurch gekennzeichnet, dass** die Porengröße der elektroosmotischen Membran (22a; 22b) an eine zu reinigende Flüssigkeit (14a; 14b) angepasst ist.

## Claims

1. Utilisation of a purification device (10a; 10b) for a purification of water contaminated by microorganisms and/or by inanimate suspended matter, with at least one first receiving region (12a; 12b) for receiving a contaminated liquid (14a; 14b), with at least one second receiving region (16a; 16b) for receiving a purified liquid (18a; 18b) and with a membrane unit (20a; 20b) that is arranged between the first receiving region (12a; 12b) and the second receiving region (16a; 16b),
the at least one membrane unit (20a; 20b) comprising an electroosmotic membrane (22a; 22b) which serves at least partially as a separating agent between the first receiving region (12a; 12b) and the second receiving region (16a; 16b),
the electroosmotic membrane (22a; 22b) having a first electrode (24a; 24b) on a first surface and having a second electrode (26a; 26b) on a second surface situated opposite the first surface,
the electroosmotic membrane (22a; 22b) being configured, when a voltage is applied, to transport a liquid from the first receiving region (12a; 12b) into the second receiving region (16a; 16b) via an electroosmotic effect, **characterised in that** in a purification step (34a) for a purification of the contaminated water, in the first receiving region (12a; 12b) a voltage is applied to the electrodes (24a, 26a; 24b, 26b) of the electroosmotic membrane (22a; 22b) and water is transported from the first receiving region (12a; 12b) into the second receiving region (16a; 16b) via an electroosmotic effect,
wherein both the pumping and the separation characteristics of the electroosmotic membrane (22a; 22b) are defined by an appropriate selection of the pore size of the electroosmotic membrane (22a; 22b),
wherein depending on the pore size different materials are separated by the electroosmotic membrane (22a; 22b),
wherein the electroosmotic membrane (22a) has a pore size between 0.1 µm and 2 µm,
wherein only the electroosmotic membrane (22a; 22b) serves as a separating agent between the receiving regions (12a, 16a; 12b, 16b).

2. Utilisation according to claim 1,
**characterised in that** in a further purification step (36a) for a purification of the electroosmotic membrane (22a; 22b), a polarity of the voltage applied at the electrodes (24a, 26a) is reversed.

3. Utilisation according to claim 2,
**characterised in that** in an analysing step (38a) following the further purification step (36a) the microorganisms (40a; 40b) detached from the electroosmotic membrane (22a; 22b) in the purification step (36a) are microbiologically analysed.

4. Utilisation according to one of the preceding claims,
**characterised in that** the purification device (10a; 10b) comprises at least one voltage source (28a, 30a; 28b, 30b) providing in at least one first operation state a voltage at the electrodes (24a, 26a; 24b, 26b) of the at least one membrane unit (20a; 20b).

5. Utilisation according to claim 4,
**characterised in that** the at least one voltage source (30a; 30b) is realized by a solar installation.

6. Utilisation according to claim 4 or 5,
**characterised in that** the purification device (10a; 10b) comprises at least one further voltage source (32a; 32b), which is realized by an energy store and which in at least one second operation state that differs from the first operation state provides a voltage at the electrodes (24a, 26a; 24b, 26b) of the at least one membrane unit (20a; 20b).

7. Utilisation according to one of the preceding claims,
**characterised in that** the purification device (10a; 10b) comprises a control and/or regulation unit (33a; 33b), which controls and/or regulates an actuation of the electroosmotic membrane (22a; 22b) via the electrodes (24a, 26a; 24b, 26b).

8. Utilisation according to one of the preceding claims,
**characterised in that** the first receiving region (12a) is on its underside delimited by the electroosmotic membrane (22a) and the second receiving region (16a) is arranged at least partially underneath the first receiving region (12a).

9. Utilisation according to one of the preceding claims,
**characterised in that** the at least one electroosmotic membrane (22b) encompasses the first receiving region (12b) at least substantially completely in at least one plane.

10. Utilisation according to claim 9,
**characterised in that** the at least one electroosmotic membrane (22b) has a hollow-cylindrical basic shape.

11. Utilisation according to one of the preceding claims,
**characterised in that** the pore size of the electroosmotic membrane (22a; 22b) is adapted to a liquid (14a; 14b) that is to be purified.

## Revendications

1. Utilisation d'un dispositif de purification (10a ; 10b) pour la purification de l'eau contaminée par des microorganismes et/ou des matières en suspension inanimées,
avec au moins une première zone recevante (12a ; 12b) pour recevoir un liquide contaminé (14a ; 14b), avec au moins une deuxième zone recevante (16a ; 16b) pour recevoir un liquide purifié (18a ; 18b) et avec une unité de membrane (20a ; 20b) disposée entre la première zone recevante (12a ; 12b) et la deuxième zone recevante (16a ; 16b),
l'au moins une unité de membrane (20a ; 20b) comprenant une membrane électroosmotique (22a ; 22b) qui sert au moins partiellement comme agent de séparation entre la première zone recevante (12a ; 12b) et la deuxième zone recevante (16a ; 16b),
la membrane électroosmotique (22a ; 22b) comprenant une première électrode (24a ; 24b) sur une première surface et la membrane électroosmotique (22a ; 22b) comprenant une deuxième électrode (26a ; 26b) sur une deuxième surface opposée à la première surface,
la membrane électroosmotique (22a ; 22b) étant prévue, si mise sous tension, à transporter de liquide de la première zone recevante (12a ; 12b) dans la deuxième zone recevante (16a ; 16b) par le biais d'un effet électroosmotique, **caractérisée en ce que** dans une étape de purification (34a) pour une purification de l'eau contaminée, dans la première zone recevante (12a ; 12b) une tension est appliquée aux électrodes (24a, 26a ; 24b, 26b) de la membrane électroosmotique (22a ; 22b) et de l'eau est transportée de la première zone recevante (12a ; 12b) dans la deuxième zone recevante (16a ; 16b) par le biais d'un effet électroosmotique,
où les caractéristiques de la membrane électroosmotique (22a ; 22b) concernant le pompage et la séparation sont définies par sélection appropriée d'une taille des pores de la membrane électroosmotique (22a ; 22b),
où en dépendance à la taille des pores des matériaux différents sont séparés par la membrane électroosmotique (22a ; 22b),
où la membrane électroosmotique (22a) comporte une taille des pores entre 0,1 µm et 2 µm,
où seulement la membrane électroosmotique (22a ; 22b) sert comme agent de séparation entre les zones recevantes (12a, 16a ; 12b, 16b).

2. Utilisation selon la revendication 1,
**caractérisée en ce que** dans une étape de purification de plus (36a) pour une purification de la membrane électroosmotique (22a ; 22b) la polarisation de la tension appliquée aux électrodes (24a, 26a) est inversée.

3. Utilisation selon la revendication 2,
**caractérisée en ce que** dans une étape d'analyse (38a) suivant l'étape de purification de plus (36a) les microorganismes (40a ; 40b) détachés de la membrane électroosmotique (22a ; 22b) dans l'étape de purification (36a) sont analysés en termes microbiologiques.

4. Utilisation selon l'une des revendications précédentes,
**caractérisée en ce que** le dispositif de purification (10a ; 10b) comprend au moins une source de tension (28a, 30a ; 28b, 30b) fournissant dans au moins un premier état d'opération une tension sur les électrodes (24a, 26a ; 24b, 26b) de l'au moins une unité de membrane (20a ; 20b).

5. Utilisation selon la revendication 4,
**caractérisée en ce que** l'au moins une source de tension (30a ; 30b) est réalisé par une installation solaire.

6. Utilisation selon la revendication 4 ou 5,
**caractérisée en ce que** le dispositif de purification (10a ; 10b) comprend au moins une autre source de tension (32a ; 32b), qui est réalisée par un accumulateur d'énergie et qui fournit dans au moins un deuxième état d'opération différant du premier état d'opération une tension sur les électrodes (24a, 26a ; 24b, 26b) de l'au moins une unité de membrane (20a ; 20b).

7. Utilisation selon l'une des revendications précédentes,
**caractérisée en ce que** le dispositif de purification (10a ; 10b) comprend unit unité de commande et/ou régulation (33a ; 33b) qui commande et/ou règle un actionnement de la membrane électroosmotique (22a ; 22b) via les électrodes (24a, 26a ; 24b, 26b).

8. Utilisation selon l'une des revendications précédentes,
**caractérisée en ce que** la première zone recevante (12a) est sur sa face inférieure délimitée par la membrane électroosmotique (22a) et la deuxième zone recevante (16a) est disposée au moins partiellement au-dessous de la première zone recevante (12a).

9. Utilisation selon l'une des revendications précédentes,
**caractérisée en ce que** l'au moins une membrane électroosmotique (22b) inclut la première zone recevante (12b) au moins sensiblement complètement dans au moins un plan.

10. Utilisation selon la revendication 9,
**caractérisée en ce que** l'au moins une membrane électroosmotique (22b) présente une forme basique de cylindre creux.

11. Utilisation selon l'une des revendications précédentes,
**caractérisée en ce que** la taille des pores de la membrane électroosmotique (22a ; 22b) est adaptée à un liquide (14a ; 14b) qui est à purifier.
